**Europäisches Patentamt**

(19) **European Patent Office**

**Office européen des brevets**

(11) Veröffentlichungsnummer: **0 152 579**
**B1**

(12) **EUROPÄISCHE PATENTSCHRIFT**

(45) Veröffentlichungstag der Patentschrift:
**22.04.87**

(51) Int. Cl.⁴: **H 02 H 9/04,** H 02 H 7/122

(21) Anmeldenummer: **84115073.3**

(22) Anmeldetag: **10.12.84**

(54) **Vorrichtung zum Kurzschlussschutz eines Stromrichtergerätes mit GTO-Thyristoren.**

(30) Priorität: **17.02.84 DE 3405793**

(43) Veröffentlichungstag der Anmeldung:
**28.08.85 Patentblatt 85/35**

(45) Bekanntmachung des Hinweises auf die Patenterteilung:
**22.04.87 Patentblatt 87/17**

(84) Benannte Vertragsstaaten:
**AT BE CH DE FR GB IT LI NL SE**

(56) Entgegenhaltungen:
**US - A - 3 444 453**

**PROCEEDINGS OF THE SEVENTH SYMPOSIUM ON ENGINEERING PROBLEMS OF FUSION RESEARCH, 25.-28. Oktober 1977, Knoxville, Tennessee, Seiten 1079-1081, IEEE, New York, US; G.L. CAMPEN u.a.: "Voltage protection scheme for MG sets used to drive inductive energy storage systems"**

(73) Patentinhaber: **Siemens Aktiengesellschaft Berlin und München, Wittelsbacherplatz 2, D-8000 München 2 (DE)**

(72) Erfinder: **Peppel, Joerg-Michael, Dr. Dipl.-Ing., Heuhohlweg 10, D-6240 Königstein (DE)**

## Beschreibung

Die Erfindung betrifft eine Vorrichtung zum Kurzschliessen der Gleichstromanschlüsse am Eingang eines mit einer Gleichstromquelle verbundenen Stromrichtergerätes entsprechend dem Oberbegriff des Anspruchs 1.

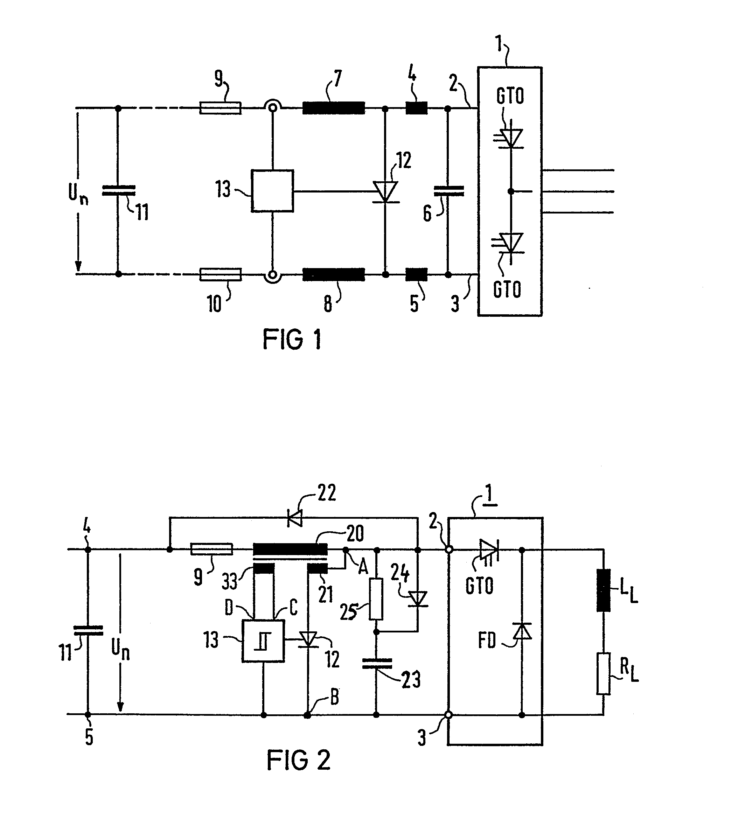

In Figur 1 ist als Beispiel eines GTO-bestückten Stromrichtergerätes ein Wechselrichter 1 dargestellt, bei dessen Gleichstromanschlüssen 2 und 3 vorgelagerte Induktivitäten 4 und 5 und ein Parallelkondensator 6 andeuten, dass die jeweils bei der Führung des Gleichstroms beteiligten Ventilzweige und deren Entlastungsschaltungen Kapazitäten und Induktivitäten (z.B. Streuinduktivitäten) enthalten. Es können den Gleichstromanschlüssen auch eigene Kondensatoren oder Induktivitäten vorgeschaltet sein, z.B. um eine Glättung der Eingangsgleichspannung oder des Eingangsgleichstromes zu erreichen. Ein Kurzschluss oder Erdschluss im Stromrichtergerät 1 führt zu einem plötzlich steil ansteigenden Fehlerstrom, der zu einer Zerstörung der Thyristoren führen kann. Aufgrund der geringen Stromstossfestigkeit von Abschaltthyristoren (GTO-Thyristoren) müssen besonders bei GTO-bestückten Stromrichtergeräten Vorkehrungen getroffen werden, um das Stromrichtergerät durch Abschalten vor Zerstörung zu schützen.

Hierzu können im Gleichstromkreis angeordnete Schutzinduktivitäten 7 und 8 verwendet werden, die üblicherweise ohnehin vorhanden sind, um den Stromanstieg des Gleichstroms bei Kommutierungen zu begrenzen bzw. bei Verwendung eines GTO diesen während des Einschaltens von der Gleichspannung zu schützen.

Sollen diese Drosseln 7, 8 allein zum Schutz des GTO verwendet werden, so müssen sie, da ein GTO prinzipiell eine verhältnismässig lange Abschalt-Verzugszeit von mehreren Mikrosekunden besitzt, unnötig gross bemessen werden, damit der Fehlerstrom innerhalb dieser Verzugszeit nicht auf Werte ansteigt, die von dem GTO nicht mehr abgeschaltet werden können.

Deshalb sind in der Regel auch bei GTO-bestückten Stromrichtergeräten konventionelle Sicherungseinrichtungen, z.B. Schmelzsicherungen 9, 10 oder Schnellschalter vorgesehen, die das Stromrichtergerät ohne Abschaltung der GTO-Thyristoren abschalten. Diese Schmelzsicherungen sind dabei zwischen der speisenden Gleichstromquelle (angedeutet durch einen Kondensator 11, z.B. den Glättungskondensator eines Spannungs-Zwischenkreises) und den Schutzinduktivitäten 7 und 8 angeordnet.

Wird auf eine Überdimensionierung der Drosseln 7 und 8 verzichtet, so erfordert die geringere Stromfestigkeit von Abschaltthyristoren weitere Massnahmen zum Kurzschlussschutz. Hierzu ist in Figur 1 ein Kurzschlusspfad zwischen den Gleichstromeingängen des Gerätes 1 vorgesehen, der über einen Hilfsthyristor 12 beim Auftreten eines kurzschlussbedingten Überstroms schliessbar ist, wobei der Zündbefehl für den Hilfsthyristor 12 von einem an die Gleichspannungsquelle angeschlossenen Überwachungsgerät 13 geliefert wird. Dieser Hilfsthyristor 12 übernimmt dann im Kurzschlussfall den grössten Teil des Fehlerstroms.

Bei diesem Verfahren genügt eine wesentlich geringere Schutzinduktivität, da als Hilfsthyristor ein konventioneller Thyristor verwendet werden kann, der lediglich einschaltbar ist und gegenüber einem GTO eine wesentlich kürzere Einschaltverzugszeit und eine höhere Strombelastbarkeit aufweist. Bei einer derartigen Schaltung entstehen jedoch Schwierigkeiten für die Aufteilung des Stromes auf den ursprünglichen, über die Abschaltthyristoren des Gerätes 1 führenden Strompfad und den über den Hilfsthyristor 12 führenden Kurzschlusspfad. Diese Stromaufteilung auf zwei parallele, praktisch widerstandsfreie Zweige ist im wesentlichen nur durch die Streuinduktivitäten und die Spannungsabfälle der in diesen Zweigen liegenden Halbleiter bestimmt. Da der Hilfsthyristor nicht nur die Spannungsquelle (11), sondern auch den Gleichstromkreis im Inneren des Gerätes 1 kurzschliesst, kommt es im Gerät 1 zu einem nur schwach bedämpften Gleichstrom, der leicht für einige Hundert Mikrosekunden auf Werte anwachsen kann, die vom GTO nicht mehr abgeschaltet werden können. Wird innerhalb dieser Zeit trotzdem durch die Steuerung des Gerätes 1 ein Abschaltbefehl auf einen GTO gegeben, so droht dessen Zerstörung.

Um einen wirksamen Kurzschlussstrom-Schutz zu erreichen, erscheint es daher bei der Anordnung nach Figur 1 einerseits erforderlich, durch entsprechende Dimensionierung der Streuinduktivitäten 4, 5 bzw. durch eigene Vorschaltinduktivitäten die Stromaufteilung zu verbessern, andererseits durch einen eigenen Eingriff in die Steuerung im Kurzschlussfall alle Abschaltimpulse für die Thyristoren zu unterdrücken. Dies bedeutet einerseits einen Eingriff in den Steuerungsablauf, andererseits schaltungstechnische Änderungen im Aufbau des Gerätes 1 und der dazugehörigen Steuerung.

Gemäss der US-A-3 444 453 kann ein mit üblichen Thyristoren bestückter Wechselrichter im Überlast fall dadurch abgeschaltet werden, dass an der Mittelanzapfung seiner Eingangsdrossel ein Hilfsthyristor angeschlossen ist, bei dessen Zündung über die eine Spulenhälfte und einen zu der anderen Spulenhälfte und dem Wechselrichter parallel liegenden Kurzschlusspfad ein Ladestrom für einen Kurzschluss-Kondensator fliesst, der in der anderen Spulenhälfte eine Gegenspannung induziert. Diese somit in den Gleichstromeingang des Wechselrichters induktiv eingeprägte Gegenspannung führt zum Erlöschen der Wechselrichter-Thyristoren.

Der Zündimpuls des Hilfsthyristors wird von einer Steuereinrichtung geliefert, die ihre Speisespannung und Zündenergie aus dem gleichen Netzgerät entnimmt wie der Steuersatz des Wechselrichters selbst und bei einem von einer Überwachungseinrichtung gelieferten Abschaltbefehl die Stromversorgung des Steuersatzes und damit die Ansteuerung des Wechselrichters unterbricht, bis die Aufladung des Kurzschluss-Kondensators beendet ist.

Der Abschaltbefehl selbst wird durch Überstrom-Überwachen gebildet, wozu die Überwachungseinrichtung einen gesonderten Stromwandler enthält, der in diesem Fall nicht im Gleichstromkreis, sondern im Wechselstromkreis (Ausgangskreis) des Wechselrichters angeordnet ist und einen Gleichrichter aufweist.

Diese Anordnung erfasst somit nur solche Störungen, die sich als Überstrom am Wechselrichterausgang bemerkbar machen. Sie ist eine relativ aufwendige Kombination von Kurzschlusspfad, Hilfsthyristor mit Steuereinrichtung, Überwachungseinrichtung, Wechselrichter-Steuersatz und Netzgerät und daher auch nicht ohne weiteres in ein übliches Stromrichtergerät nachträglich oder als Zusatzgerät einfügbar.

Der Erfindung liegt die Aufgabe zugrunde, einen derartigen Überlastschutz so weiterzubilden und zu vereinfachen, dass ein GTO-bestücktes Stromrichtergerät, insbesondere ein Wechselrichter oder ein Gleichstromsteller, mit möglichst geringem Aufwand auch bei einem Kurzschluss oder Erdschluss im Gerät selbst vor einer Zerstörung durch Überströme geschützt ist. Dabei ist besonders vorteilhaft, dass diese Vorrichtung als Vorschaltgerät zu dem üblichen Stromrichter ohne weiteren Eingriff in den Stromrichter und seine Steuerung selbst verwirklicht werden kann.

Diese Aufgabe wird gelöst durch eine Vorrichtung mit den Merkmalen des Anspruchs 1. Vorteilhafte Weiterbildungen dieser Vorrichtung sind in den Unteransprüchen gekennzeichnet.

Anhand von drei weiteren Figuren wird die Erfindung näher erläutert. Dabei zeigt Figur 2 ein Prinzipschaltbild der erfindungsgemässen Vorrichtung, angewendet auf einen Gleichstromsteller. In Fig. 3 und 4 ist je eine weitere erfindungsgemässe Schutzschaltung für einen Wechselrichter dargestellt.

Der Gleichstromsteller ist in Fig. 2 durch das im Gleichstromkreis angeordnete abschaltbare Ventil 1 (also einen als Hauptthyristor wirkenden Abschaltthyristor GTO mit einer nachgeordneten Freilaufdiode FD für den Laststrom) dargestellt, wobei der Laststrom über eine als Lastinduktivität $L_L$ und Lastwiderstand $R_L$ dargestellte Last geführt ist. Mit 2, 3 sind wieder die Gleichstromanschlüsse des Gerätes 1 bezeichnet, die über eine Schutzinduktivität 20 an die Gleichstromquelle (4, 5, Kondensator 11) mit der Eingangsgleichspannung $U_n$ angeschlossen sind. Bei Auftreten eines kurzschlussbedingten Überstroms, der von der Überwachungs- und Steuereinrichtung 13 erfasst wird, wird der Hilfsthyristor 12 gezündet, der einen die Schutzinduktivität 20 enthaltenden Kurzschlusspfad A, B für den Gleichstrom der Gleichstromquelle schliesst.

Bei Auftreten des Überstroms wird eine Gegenspannung an die Gleichstromeingänge 2, 3 des Gerätes gelegt. Dadurch wird erreicht, dass der GTO – unabhängig vom Auftreten eines Abschaltbefehls – erlischt und der Laststrom zwangsweise vom GTO auf die Freilaufdiode FD kommutiert. Hierzu ist im durch den Hilfsthyristor kurzschliessbaren Eingangsgleichstromkreis 4, 2, 3, 5 des Gerätes 1 ein Energiespeicher vorgesehen, dessen Speicherzustand bei der Hilfsthyristor-Zündung sich ändert und dadurch eine Gegenspannung an den Gleichspannungsanschlüssen des Gerätes erzeugt.

Vorteilhaft wird die Gegenspannung induktiv den Gleichstromeingängen eingeprägt. Die Gegenspannung kann dabei insbesondere induktiv aus dem Kurzschlusspfad der Gleichstromquelle ausgekoppelt werden. Dies wird in Fig. 2 dadurch erreicht, dass als Energiespeicher eine Zusatzinduktivität 21 verwendet wird, die magnetisch mit der Schutzinduktivität 20 gekoppelt ist. Die Zusatzinduktivität 21 ist also praktisch eine Hilfswicklung für die als Kurzschlussstrom-Begrenzungsdrossel ausgebildete Schutzinduktivität 20.

Kommt es nun aufgrund eines Erdschlusses im Stromrichtergerät 1 bzw. im Lastkreis dazu, dass praktisch die gesamte Spannung $U_n$ an der Drossel 20 abfällt, so steigt der Strom durch diese Drossel exponentiell an. Das Zünden des Hilfsthyristors 12 schliesst somit einen Kurzschlusspfad A, B für die Gleichstromquelle 11, wodurch der Speicher 21 aufgeladen wird. Die Aufladung erfolgt dabei durch den Fehlerstrom selbst und bewirkt, dass der Anschluss 2 gegenüber dem Anschluss 3 des Gerätes induktiv auf negatives Potential gelegt wird. Die Stromüberwachung geschieht dabei gemäss der Erfindung dadurch, dass die Überwachungs- und Steuereinrichtung 13 an ihrem Speiseeingang C, D über eine Sekundärwicklung 33 der Drossel 20 direkt induktiv aus dem Kurzschlusspfad gespeist wird und somit die Zündenergie für den Hilfsthyristor 12 ebenfalls dem Fehlerstrom entnommen wird.

Ferner ist bei der Vorrichtung nach Figur 2 vorgesehen, die Schutzinduktivität 20 und ggf. die konventionelle Sicherungseinrichtung 9 über eine antiparallele Diode 22 zu überbrücken, so dass durch Wechselstromanteile im speisenden Gleichstrom, die auch im ungestörten Betrieb des Gerätes 1 auftreten, keine Überspannungen entstehen können.

Ein GTO-bestücktes Stromrichtergerät besitzt im allgemeinen Thyristor-Entlastungsschaltungen, die in der Blockdarstellung der Figuren nicht einzeln aufgeführt sind. Damit evtl. auftretende Umladeströme dieser Entlastungsschaltungen nicht über die Begrenzungsdrosseln 20 fliessen und dadurch einerseits die Verluste erhöhen, andererseits die Kurzschlusserkennung erschweren, ist zwischen den Eingängen 2, 3 ein paralleler Stützkondensator 23 angeordnet. Dieser muss jedoch im Fehlerfall ebenfalls umgeladen werden. Damit die dabei umgesetzte Kondensatorenergie nicht über die Thyristoren fliesst und dort unter Erwärmung der Thyristoren verbraucht werden muss, ist in Reihe zum Kondensator 23 ein Entladewiderstand 25 angeordnet, der jedoch für die erwähnten Umladeströme durch die Paralleldiode 24 kurzgeschlossen ist.

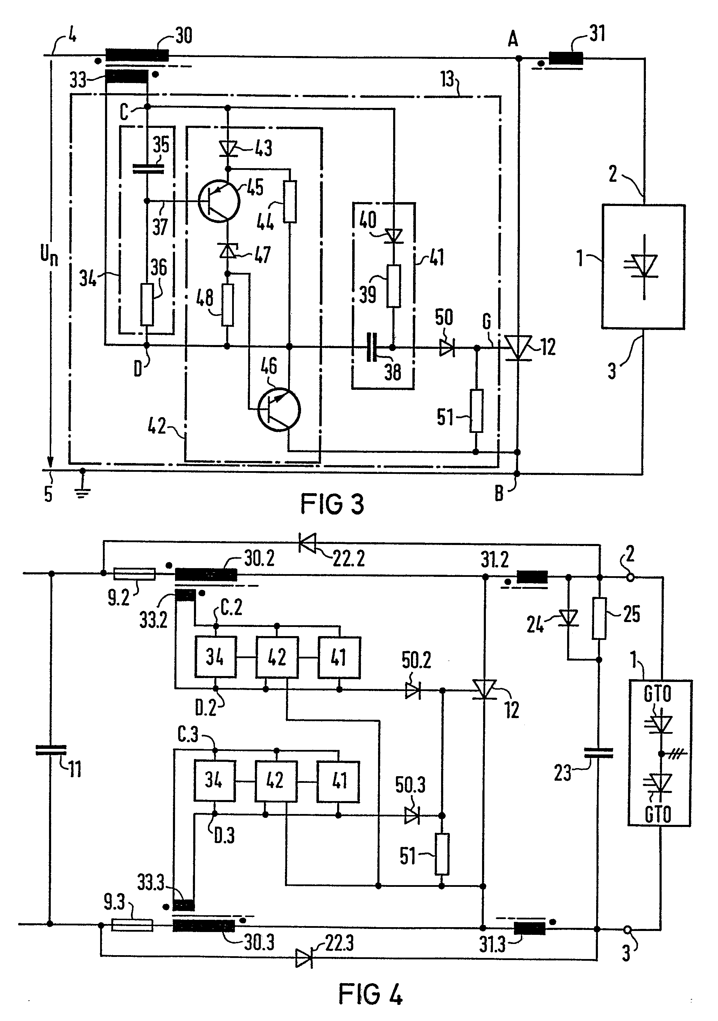

Beim Ausführungsbeispiel nach Figur 2 ist die Hilfswicklung 21 in Reihe mit dem Hilfsthyristor 12 und parallel zu den Anschlüssen 2 und 3 angeordnet. Dies ist jedoch keineswegs zwangsläufig, vielmehr zeigt Figur 3 eine bevorzugte andere Ausbildung der Begrenzungsdrossel, der Schutzinduktivität und der Zusatzinduktivität. Die Schutzinduktivität ist dabei als eine Drossel mit Anzapfung ausgebildet, wobei die Anzapfung den Anschlusspunkt des den Kurzschlusspfad bildenden Hilfsthyristors 12 darstellt und das in Richtung des von der Gleichstromquelle fliessenden Gleichstroms stromabwärts liegende Wicklungsteil mit dem Gleichstromanschluss 2 verbunden ist. Dieser Wicklungsteil wird normalerweise von dem betriebsmässigen Gleichstrom gleichsinnig mit dem Wicklungsteil 30 (Schutzinduktivität) durchflossen und als magnetischer Energiespeicher durch Magnetisierung aufgeladen. Wird nun im Störungsfall der Hilfsthyristor 12 gezündet, so besteht im Idealfall zwischen den Punkten A und B des Kurzschlusspfades keine Spannung mehr, der Fehlerstrom kann daher im Gerät 1 nicht weiter ansteigen. Dies trifft in Wirklichkeit aber wegen der unvermeidlichen parasitären Induktivität zwischen diesen Punkten nicht zu. Die magnetische Kopplung der Wicklungsteile 30 und 31 bewirkt aber, dass der Wicklungsteil 31 durch den ansteigenden Fehlerstrom im Teil 30 noch weiter geladen wird und in dem Gleichstromkreis, der aus dem entsprechenden Gleichstrompfad im Gerät 1, der Hilfsinduktivität 31 und dem Hilfsthyristor 12 gebildet ist, eine negative Spannung induziert wird, die den parasitären Spannungsabfall im Kurzschlusspfad übersteigt. Somit kehrt sich die treibende Spannung zwischen den Anschlüssen 2 und 3 um, innerhalb weniger Mikrosekunden baut sich der Fehlerstrom im Gerät ab und anschliessend werden alle Thyristoren des Gerätes 1 zwangskommutiert. Das Gerät 1 wird also im Kurzschlussfall nur sehr wenig belastet.

Die Induktivitäten 30 und 31 und deren Kopplung ist entsprechend den Bedürfnissen des Gerätes vorteilhaft so bemessen, dass die induzierte Spannung etwa 10 V beträgt, was zur Zwangskommutierung der GTO's in der Regel vollkommen ausreicht. Höhere Spannungen bewirken lediglich, dass über die Freilaufdioden des Gerätes ein unnötig hoher Gegenstrom fliesst. Andererseits müssen die Induktivitäten 30 und 31 sowohl eine ausreichende Stromanstiegsbegrenzung der Gerätethyristoren im Normalfall wie auch einen ausreichenden Schutz für den Hilfsthyristor 12 im Kurzschlussfall sicherstellen, d.h. nach der Zündung des Hilfsthyristors darf die auf diesen Hilfsthyristor wirkende Induktivität der Gesamtdrossel nicht zu gering sein. Ausserdem darf der Anstieg des Kurzschlussstromes während der unvermeidlichen Verzugszeit zwischen dem Eintritt des Kurzschlusses und der Zündung des Hilfsthyristors den Abschaltthyristoren des Gerätes 1 nicht gefährlich werden. In der Regel genügt es, auf der Begrenzungsdrossel 30 nach dem Abzweig für den Hilfsthyristor 12 den Gleichstromanschluss 2 in einer oder wenigen Wicklungen um den Drosselkern herum zu führen.

Figur 3 zeigt ausserdem eine vorteilhafte Ausführungsform der Überwachungs- und Steuereinrichtung 13. Deren Speisestrom wird erfindungsgemäss an einer Sekundärwicklung 33 der Begrenzungsdrossel 30 abgegriffen. Der Wicklungssinn der Sekundärwicklung 33 ist dabei umgekehrt, so dass der Eingang C der Steuer- und Überwachungseinrichtung 13 gegenüber dem Eingang D auf einem positiven Potential liegt, das gering ist, solange im normalen Betrieb der Wechselspannungsanteil im betriebsmässigen Gleichstrom gering ist. Die Steuer- und Überwachungseinrichtung 13 besteht dabei einerseits aus einem Verzögerungsglied 34 für die Speisespannung, das einen vom Strom zwischen C und D aufladbaren Kondensator 35 enthält, der integrierend auf die Speisespannung wirkt und dem ein Widerstand 36 in Reihe geschaltet ist, durch den der Kondensator mit einer entsprechenden Entladecharakteristik entladen wird. Am Abgriff 37 zwischen Kondensator und Widerstand steht somit ein Wert für die mit der Übertragungsfunktion eines Verzögerungsgliedes erster Ordnung verzögerte Speisespannung an.

Ferner enthält die Einrichtung eine kapazitive Speicherschaltung 41 mit einem Speicherkondensator 38, der über einen Widerstand 39 und eine Diode 40 von der Speisespannung an den Eingängen D und C aufgeladen wird.

Die Anschlüsse C und D speisen ferner ein Steuerglied 42 mit einer Reihenschaltung aus einer weiteren Diode 43 und einem Widerstand 44. Da im Normalbetrieb die Speisespannung niedrig ist und praktisch der am Abgriff 37 anliegenden verzögerten Spannung entspricht, ist ein im Steuerglied 42 enthaltener Transistor 45 gesperrt und bewirkt gleichzeitig die Sperrung eines weiteren Transistors 46, durch den im gezündeten Zustand der Speicherkondensator 38 in einen Entladekreis geschaltet wird, der über die Steuerstrecke G-B des Hilfsthyristors führt und diesen durch Entladung des Speicherkondensators 38 mit Zündstrom speist. Der Thyristor 12 ist dabei in üblicher Weise durch eine Steuerstromdiode 50 und einen Schutzwiderstand 51 beschaltet.

Bei einem Kurz- oder Erdschluss im Stromrichtergerät 1 liegt nun — bis auf einen verhältnismässig kleinen induktiven Spannungsabfall an der Zusatzinduktivität 31 — praktisch die gesamte Versorgungsspannung $U_n$ an der Spule 30 an, über die daher der stark anwachsende Fehlerstrom fliesst. Dies führt dazu, dass die Speisespannung zwischen den Steuereingängen C und D ansteigt und entsprechend dem Verhalten des Verzögerungsgliedes 34 die Basis des Transistors 45 mit steigendem Potential angesteuert wird. Der Transistor 45 wird frühestens nach einer durch das Verzögerungsglied 34 gegebenen Verzögerungszeit stromführend. Liegt zu diesem Zeitpunkt noch eine ausreichend hohe Steuerspannung zwischen den Punkten C und D, so bricht die zusammen mit einem Reihenwiderstand 48 im Hauptstromkreis des Transistors 45 liegende Zenerdiode 47 durch und liefert den Basisstrom zum Durchschalten des Transistors 46. Der Speicherkondensator 38 entlädt sich somit über die Diode 50 auf das Gitter G des Hilfsthyristors 12. Ist dagegen die Spannung zwischen den Eingängen C und D nach der erwähnten Verzögerungszeit bereits wieder so weit abgeklungen, dass die Zenerdiode 47 sperrt, so bleibt der Transistor 46 gesperrt und eine Zündung unterbleibt.

Das Steuerglied 42 führt also eine Zündung des Hilfsthyristors 12 nur bei gleichzeitigem Vorliegen von zwei Bedingungen durch, nämlich einer hinreichend grossen, über der Durchbruchspannung der Zenerdiode 47 liegenden Speisespannung, die einem hohen Überstrom entspricht, wie er praktisch nur bei Kurzschlüssen des Gerätes 1 auftritt, sowie einer über die Verzögerungszeit des Verzögerungsgliedes 34 sich erstreckende Dauer des überstrombedingten Spannungsanstiegs, so dass kurzzeitige Stromspitzen, wie sie z.B. bei Kommutierungen im Gerät 1 auftreten, nicht zu Schutzzündungen am Hilfsthyristor 12 führen.

Bei diesem Verfahren ist sichergestellt, dass ein kurzschlussbedingter Stromanstieg weitgehend über den Kurzschlusspfad des Hilfsthyristors 12 kurzgeschlossen wird und die Abschaltthyristoren des Gerätes 1 nicht überlastet werden. Daher droht diesen Thyristoren auch keine Beschädigung, wenn während eines derartigen Kurzschlusses ein Abschaltbefehl von der Steuerung erzeugt wird. Es ist daher nicht erforderlich, mittels der Steuer- und Überwachungseinrichtung 13 im Kurzschlussfall in die Steuerung des Gerätes 1 selbst einzugreifen. Vielmehr kann diese Steuer- und Überwachungseinrichtung 13 zusammen mit dem Hilfsthyristor 12 und den Induktivitäten 30 und 31 als eine eigene Baugruppe ausgeführt werden, die bei Bedarf anstelle oder zusätzlich zu den üblichen Strombegrenzungsdrosseln den Gleichstromanschlüssen des Gerätes 1 vorgeschaltet wird. Der konstruktive Aufwand dieses Gerätes ist sehr gering; das aufwendigste Bauelement ist dabei in der Regel die ohnehin benötigte Schutzinduktivität selbst. Gegenüber anderen Ausführungsformen, bei denen die Gegenspannung durch andere Energiespeicher, z.B. eine Fremdspannungsquelle, geliefert ist, ergibt sich eine einfachere und kostengünstigere Lösung.

Figur 4 zeigt ein entsprechendes Vorschaltgerät für die Gleichstromanschlüsse 2, 3 eines Wechselrichters, wobei in diesem Fall je nach Art des auftretenden Kurz- oder Erdschlusses im Gerät 1, ein kurzschlussbedingter Überstrom im Gleichstromanschluss 2, im Gleichstromanschluss 3 oder in beiden Anschlüssen auftreten kann. Daher ist in jeden der beiden Gleichstromanschlüsse 2 und 3 eine entsprechende Schutzinduktivität 30.2 bzw. 30.3 mit einer Zusatzinduktivität 31.2 bzw. 31.3 angeordnet, die jeweils zu einer Drossel mit einer Anzapfung für den Hilfsthyristor 12 als Kurzschlusspfad ausgebildet sind. Jede dieser Drosseln speist induktiv die Eingänge zu C.2 und D.2 bzw. C.3 und D.3 einer eigenen Überwachungs- und Steuereinrichtung. Da durch den Wicklungssinn der Sekundärwicklung für die induktive Speisung der Eingang C.3 positiv gegenüber dem Eingang D.3 liegt, kann auch die dem Gleichstromanschluss 3 zugeordnete Steuer- und Überwachungseinrichtung aus einem Verzögerungsglied 34, einer kapazitiven Speichereinrichtung 41 und einem Steuerglied 42 entsprechend Figur 3 aufgebaut sein. Die beiden Überwachungs- und Steuereinrichtungen sind über die entsprechenden Diode 50.2 und 50.3 sowie den Schutzwiderstand 51 an die Steuerstrecke des Hilfsthyristors 12 angeschlossen. Ebenfalls sind für jeden Anschluss 2, 3 eine konventionelle Sicherungseinrichtung 9.2 bzw. 9.3 und eine antiparallele Diode 22.2 bzw. 22.3 vorgesehen. Die Schutzschaltung wird ergänzt durch den bereits besprochenen Stützkondensator 23 mit der in Reihe liegenden Antiparallelschaltung des Widerstandes 25 und der Diode 24.

Diese Anordnung bewirkt somit, dass beim Auftreten eines Kurz- oder Erdschlusses der Kurzschlussstrom über den Hilfsthyristor 12 kurzgeschlossen, den Gleichstromeingängen 2, 3 des Gerätes 1 eine negative Spannung zur Zwangskommutierung der Abschaltthyristoren induktiv eingekoppelt und somit der Gleichstrom im Gerät 1 begrenzt wird und dass schliesslich bei weiterem Anwachsen des Fehlerstromes das Gerät 1 durch Ansprechen der konventionellen Sicherungseinrichtungen 9.2 und 9.3 abgeschaltet werden kann.

**Patentansprüche**

1. Vorrichtung zum Kurzschliessen der Gleichstromanschlüsse (2, 3) am Eingang eines mit einer Gleichstromquelle ($U_n$, 11) verbundenen Stromrichtergerätes (1) mit
a) einer Überwachungs- und Steuereinrichtung (13) zur Bildung eines Zündsignales bei Auftreten eines Überstromes,
b) einem Hilfsthyristor (12), dessen Steueranschluss (G) mit dem Zündsignal beaufschlagt wird, und der einen Kurzschlusspfad (A, B) zwischen den Gleichstromanschlüssen (2, 3) schliesst,
c) einem in dem durch den Kurzschlusspfad geschlossenen Stromkreis (A, 2, 3, B) gelegenen Energiespeicher, durch dessen Speicherzustand bei gezündetem Hilfsthyristor eine Gegenspannung an die Gleichstromanschlüsse (2, 3) angelegt wird,
dadurch gekennzeichnet, dass
d) das Stromrichtergerät (1) mit Abschaltthyristoren (GTO-Thyristoren) ausgerüstet ist,
e) die Überwachungs- und Steuereintichtung (13) zur Bildung des Zündsignales induktiv an den Eingangsgleichstromkreis (4, 2, 3, 5) des Stromrichtergerätes (1) angekoppelt ist, und
f) die Überwachungs- und Steuereinrichtung (13) über ihren Speiseeingang (C, D) ausschliesslich von dem in dem Eingangsgleichstromkreis (4, 2, 3, 5) fliessenden Strom induktiv gespeist wird (Figur 2).

2. Vorrichtung nach Anspruch 1, gekennzeichnet durch wenigstens eine Schutzinduktivität (20 bzw. 30) zwischen Gleichstromquelle ($U_n$, 11) und Kurzschlusspfad (A, B) im Eingangsgleichstromkreis (4, 2, 3, 5) des Stromrichtergerätes (1).

3. Vorrichtung nach Anspruch 2, dadurch gekennzeichnet, dass der Speiseeingang (C, D) der Überwachungs- und Steuereinrichtung (13) induktiv (33) an die Schutzinduktivität (20 bzw. 30) angekoppelt ist.

4. Vorrichtung nach Anspruch 2 oder 3, gekennzeichnet durch eine mit der Schutzinduktivität (20) magnetisch gekoppelte Zusatzinduktivität (21) als Energiespeicher.

5. Vorrichtung nach Anspruch 4, dadurch gekennzeichnet, dass die Schutzinduktivität (30) und die Zusatzinduktivität (31) als Strombegrenzungsdrossel mit Anzapfung ausgebildet ist und der Hilfsthyristor an der Anzapfung angeschlossen ist (Figur 3).

6. Vorrichtung nach Anspruch 5, dadurch gekennzeichnet, dass der Strombegrenzungsdrossel (30.2, 31.2) eine konventionelle Sicherungseinrichtung (9.2) vorgeschaltet ist, dass antiparallel zu dieser Reihenschaltung eine Diode (22.2) geschaltet ist und dass zwischen der Begrenzungsdrossel (30.2, 31.2) und einem Gleichstromeingang (2) des Stromrichtergerätes (1) ein den Gleichstromanschlüssen (2, 3) paralleler Kondensator (23) mit einer in Reihe liegenden Parallelschaltung eines Widerstandes (25) und einer Diode (24) angeordnet ist (Figur 4).

7. Vorrichtung nach einem der Ansprüche 1 bis 6, dadurch gekennzeichnet, dass
a) der Speiseeingang (C, D) der Überwachungs- und Steuereinrichtung (13) ein Steuerglied (42) und eine kapazitive Speicherschaltung (41) versorgt,
b) das Zündsignal vom Steuerglied (42) abgegeben wird, wenn die im Speiseeingang auftretende Spannung einen im Steuerglied vorgegebenen Grenzwert überschreitet, und
c) die kapazitive Speicherschaltung (41) bei Vorliegen eines Zündsignales auf den Steueranschluss (G) des Hilfsthyristors (12) entladen wird.

8. Vorrichtung nach Anspruch 7, dadurch gekennzeichnet, dass der Speiseeingang (C, D) der Überwachungs- und Steuereinrichtung (13) ein Zeitverzögerungsglied (34) versorgt, welches die Abgabe eines Zündsignals für eine seiner Zeitkonstanten entsprechende Dauer nach Ansteigen des induktiv erfassten Stromes im Eingangsgleichstromkreis (4, 2, 3, 5) des Stromrichtergerätes (1) unterbindet.

## Claims

1. A device for short-circuiting the d.c. terminals (2, 3) at the input of a converter (1) connected to a d.c. source (Un, 11); comprising:
a) a monitor-and-control device (13) which forms an ignition signal when an excess current flows;
b) an auxiliary thyristor (12) whose control terminal (G) is supplied with the ignition signal and which closes a short-circuit path (A, B) between the d.c. terminals (2, 3); and

c) an energy store arranged in the circuit (A, 2, 3, B) completed by the short-circuit path and whose store status when the auxiliary thyristor is ignited causes a counter-voltage to be connected to the d.c. terminals (2, 3);
characterised in that
d) the converter (1) is equipped with disconnect thyristors (GTO-thyristors);
e) the monitor-and-control device (13) which forms the ignition signal is inductively coupled to the input d.c. circuit (4, 2, 3, 5) of the converter (1); and
f) the monitor-and-control device (13) is inductively fed via its feed input (C, D) solely by the current flowing in the input d.c. circuit (4, 2, 3, 5) (Fig. 2).

2. A device as claimed in Claim 1, characterised by at least one protective inductance (20, 3) between the d.c. source (Un, 11) and the short-circuit path (A, B) in the input d.c. circuit (4, 2, 3, 5) of the converter (1).

3. A device as claimed in Claim 2, characterised in that the feed input (C, D) of the monitor-and-control device (13) is inductively (33) coupled to the protective inductance (20, 30).

4. A device as claimed in Claim 2 or 3, characterised by an additional inductance (21) magnetically coupled to the protective inductance (20) as an energy store.

5. A device as claimed in Claim 4, characterised in that the protective inductance (30) and the additional inductance (31) are formed by a current-limiting choke with a tapping, and that the auxiliary thyristor is connected to the tapping (Fig. 3).

6. A device as claimed in Claim 5, characterised in that the current-limiting choke (30.2, 31.2) is connected in series with a conventional fuse device (9.2), that a diode (22.2) is connected in antiparallel fashion to this series arrangement, and that parallel to the d.c. terminals (2, 3) a capacitor (23) is connected in series with a parallel combination of a resistor (25) and a diode (24) between the limiting choke (30.2, 31.2) and a d.c. input (2) of the converter (1) (Fig. 4).

7. A device as claimed in one of Claims 1 to 6, characterised in that:—
a) the feed input (C, D) of the monitor-and-control device (13) supplies a control component (42) and a capacitive store circuit (41);
b) the ignition signal is emitted by the control component (42) when the voltage which occurs at the feed input exceeds a limit value predetermined in the control component; and
c) the capacitive store circuit (41) is discharged to the control terminal (G) of the auxiliary thyristor (12) when an ignition signal occurs.

8. A device as claimed in Claim 7, characterised in that the feed input (C, D) of the monitor-and-control device (13) supplies a delay element (34) which suppresses the emission of an ignition signal for a period of time corresponding to its time constant following the increase in the inductively-measured current in the input d.c. circuit (4, 2, 3, 5) of the converter (1).

## Revendications

1. Dispositif pour court-circuiter les bornes à courant continu (2, 3) à l'entrée d'un convertisseur de courant (1) relié à une source de courant continu ($U_n$, 11), et comportant:

a) un dispositif de contrôle et de commande (13) servant à former un signal d'amorçage lors de l'apparition d'une surintensité,

b) un thyristor auxiliaire (12), dont la borne de commande (G) est chargée par le signal d'amorçage et qui ferme une voie de court-circuit (A, B) entre les bornes à courant continu (2, 3),

c) un accumulateur d'énergie disposé dans le circuit (A, 3, B) fermé par la voie de court-circuit et, grâce à l'état de laquelle une tension antagoniste est appliquée aux bornes à courant continu (2, 3), lorsque le thyristor auxiliaire est amorcé,

caractérisé en ce que:

d) le convertisseur de courant (1) est équipé de thyristors de coupure (thyristors GTO),

e) le dispositif de contrôle et de commande (13) est accouplé au circuit à courant continu d'entrée (4, 2, 3, 5) du convertisseur de tension (1), pour la formation du signal d'amorçage, et

f) le dispositif de contrôle et de commande (13) est alimenté de façon inductive par l'intermédiaire de son entrée d'alimentation (C, D) exclusivement par le courant circulant dans le circuit à courant continu d'entrée (4, 2, 3, 5) (figure 2).

2. Dispositif suivant la revendication 1, caractérisé par au moins une inductance de protection (20 ou 30) branchée entre la source de courant continu ($U_n$, 11) et la voie de court-circuit (A, B) dans le circuit à courant continu d'entrée (4, 2, 3, 5) du convertisseur de courant (1).

3. Dispositif suivant la revendication 2, caractérisé par le fait que l'entrée d'alimentation (C, D) du dispositif de contrôle et de commande (13) est accouplée de façon inductive (33) à l'inductance de protection (20 ou 30).

4. Dispositif suivant la revendication 2 ou 3, caractérisé par une inductance supplémentaire (21) formant accumulateur d'énergie et accouplée magnétiquement à l'inductance de protection (20).

5. Dispositif suivant la revendication 4, caractérisé par le fait que l'inductance de protection (30) et l'inductance supplémentaire (31) sont réalisées sous la forme d'une bobine de limitation de courant comportant une prise et que le thyristor auxiliaire est raccordé à la prise (figure 3).

6. Dispositif suivant la revendication 5, caractérisé par le fait qu'un dispositif classique de sécurité (9.2) est branché en amont de la bobine de limitation de courant (30.2, 31.2), qu'une diode (22.2) est raccordée selon un montage antiparallèle avec ce circuit série et qu'entre la bobine de limitation (30.2, 31.2) et une entrée à courant continu (2) du convertisseur de courant (1) se trouvent disposés un condensateur (23) branché en parallèle avec les bornes à courant continu (2, 3) ainsi qu'un montage en parallèle, branché en série avec ce condensateur et formé d'une résistance (25) et d'une diode (24) (figure 4).

7. Dispositif suivant l'une des revendications 1 à 6, caractérisé par le fait que:

a) l'entrée d'alimentation (C, D) du dispositif de contrôle et de commande (13) alimente un circuit de commande (42) et un circuit de stockage capacitive (41),

b) le signal d'amorçage est délivré par le circuit de commande (42) lorsque la tension apparaissant à l'entrée d'alimentation dépasse une valeur limite prédéterminée dans le circuit de commande, et

c) le circuit de mémoire capacitive (41) est déchargé dans le cas de la présence d'un signal d'amorçage sur la borne de commande (G) du thyristor auxiliaire (12).

8. Dispositif suivant la revendication 7, caractérisé par le fait que l'entrée d'alimentation (C, D) du dispositif de contrôle et de commande (13) alimente un circuit de retardement (34), qui interrompt la délivrance d'un signal d'amorçage pendant une durée correspondant à sa constante de temps, après l'accroissement du courant, détecté de façon inductive, dans le circuit à courant continu d'entrée (4, 2, 3, 5) du convertisseur de courant (1).

FIG 1

FIG 2

FIG 3

FIG 4